# EUROPEAN PATENT APPLICATION

(11) **EP 2 466 351 A1**
(43) Date of publication of application: **20.06.2012**
(21) Application number: 10818602.4
(22) Date of filing: 25.06.2010
(51) Int. Cl.: G02B 6/24, G02B 6/02, G02B 6/38

(54) **OPTICAL FIBER CONNECTED BODY AND METHOD FOR PRODUCING SAME**

(30) Priority: 25.09.2009 JP 2009221011
(71) Applicant: Sumitomo Electric Industries, Ltd., Chuo-ku Osaka-shi Osaka 541-0041 (JP)
(72) Inventor: NISHIOKA, Daizo, Yokohama-shi Kanagawa 244-8588 (JP); YAMAUCHI, Takayasu, Yokohama-shi Kanagawa 244-8588 (JP); IMAIZUMI, Tsuyoshi, Yokohama-shi Kanagawa 244-8588 (JP); MINAMITSUBO, Hiroya, Yokohama-shi Kanagawa 244-8588 (JP)
(74) Representative: HOFFMANN EITLE
(86) International application number: PCT/JP2010/060799
(87) International publication number: WO 2011/036925

(57) **Abstract**

Provided is a connected optical fiber that is stable and has minimal connection loss even in a high-temperature or low-temperature environment, without involving an excessive amount of labor in the optical fiber connection process, and also provided is a method for assembling a connected optical fiber. The connected optical fiber includes a first optical fiber, a second optical fiber, and a mechanical splice, an end face of the first optical fiber and an end face of the second optical fiber being placed end to end and mechanically connected in the mechanical splice. In this collected optical fiber, at least one end face among the end face of the first optical fiber and the end face of the second optical fiber is formed having a convex curved surface shape in a direction angled with respect to a surface perpendicular to an axis of the optical fiber that has the end face.

## Description

### Technological Fiend

The present invention relates to a connected optical fiber in which two optical fibers (glass fibers) are placed end to end with each other and mechanically connected, and to a method for assembling the same.

### Background Technology

Methods for connecting optical fibers to each other by mechanical splicing include a method whereby optical fibers whose distal ends are cut perpendicular to the axes of the optical fibers are connected to each other via an index-matching material. In the connected optical fiber manufactured by this method, since there is a large amount of temperature-dependent fluctuation in the refractive index of the index-matching material, significant reflection of light occurs in high-temperature or low-temperature environments. In another method, optical fibers whose distal ends are cut at an angle are connected to each other via an index-matching material. In the connected optical fiber manufactured by this method, the effect of reflected light is reduced, but because the interval between the core portions of the two optical fibers increases, the incidence of connection loss increases, and the connection loss becomes unstable.

In order to overcome such connection loss and instability, Japanese Laid-open Patent Publication No. 2009-145381 (Patent Citation 1) describes a method for connecting two optical fibers whose distal ends are cut at an angle by placing the optical fibers end to end so that the inclination directions of the cut surfaces coincide. In this method, the inclination directions of the cut surfaces of the optical fibers must be exactly managed so as to coincide, and the optical fiber connection process requires an excessive amount of labor.

### Disclosure of the Invention

### Problems to Be Solved by the Invention

An object of the present invention is to provide a connected optical fiber that is stable and has minimal connection loss even in a high-temperature or low-temperature environment, without involving an excessive amount of labor in the optical fiber connection process, and to provide a method for assembling a connected optical fiber.

### Means Used to Solve the Above-Mentioned Problems

In order to achieve the abovernentioned objects, a connected optical fiber is provided including a first optical fiber, a second optical fiber, and a mechanical splice, an end face of the first optical fiber and an end face of the second optical fiber being placed end to end and mechanically connected in the mechanical splice. In this connected optical fiber, at least one end face among end faces of the first optical fiber and the end face of the second optical fiber is formed having a convex curved surface shape in a direction angled with respect to a surface perpendicular to an axis of the optical fiber that has the end face.

In the connected optical fiber of the present invention, a configuration can be adopted in which the mechanical splice includes a base having a fiber groove, a pressing member, and a clamp for holding together the base and the pressing member, one end part including the end face of the first optical fiber and one end part including the end face of the second optical fiber being pressed against the base by the pressing member in a state of being positioned arranged in the fiber groove. At this time, the first optical fiber can be an embedded optical fiber in which the other end part thereof is retained in a ferrule fixed to the base.

In the connected optical fiber of the present invention, the length along the axis of the optical fiber from the distal end of the optical fiber that has the at least one end face to a rear end of the end face is preferably 40 µm or less. More preferably, the length along the axis of the optical fiber to the position at which the width of the end face is 40 µm from the distal end of the optical fiber that has the at least one end face is 30 µm or less. In the connected optical fiber of the present invention, at the at least one end face, the inclination angle of the end face with respect to a surface perpendicular to the axis of the optical fiber in a core portion of the optical fiber that has the end face is preferably 4 to 12 degrees.

As another aspect of the invention, there is provided an optical fiber connector including a mechanical splice having a base which has a fiber groove, a pressing member, and a clamp for holding together the base and the pressing member; a ferrule fixed to the base, and an embedded optical fiber. In the optical fiber connector, one end face of the embedded optical fiber is formed having a convex curved surface shape in a direction angled with respect to a surface perpendicular to an axis of the embedded optical fiber, one end side of the embedded optical fiber is positioned arranged in the fiber groove, and the other end side of the embedded optical fiber is retained in the ferrule.

As another aspect of the invention, there is provided a method for assembling a connected optical fiber, the method including placing end faces of two optical fibers end to end and mechanically connecting the optical fibers through use of a mechanical splice. This assembling method includes the steps of introducing the two optical fibers into the mechanical splice, the end face of at least one optical fiber among the two optical fibers having a convex curved surface shape in a direction angled with respect to a surface perpendicular to the axis of the optical fiber, placing end faces against each other, and fixing the two optical fibers in this state in the mechanical splice.

### BRIEF DESCRIPTION OF THE DRAWINGS

FIG. 1 is a perspective view showing an optical fiber connector that includes an embodiment of the connected optical fiber according to the present invention;

FIG. 2 is a sectional view showing the mechanical splice included in the optical fiber connector of FIG. 1 taken along a plane including the optical fiber;

FIGS. 3A, 3B, and 3C are sectional views perpendicular to the optical fiber of the mechanical splice included in the optical fiber connector of FIG. 1 prior to insertion, during insertion, and after withdrawal of a wedge, respectively;

FIG. 4A is an enlarged plan view showing the distal end portion of the optical fiber inserted into the mechanical splice of FIG. 2, and FIG. 4B is an enlarged side view of the same;

FIG. 5 is a perspective view showing the method for assembling the optical fiber connector of FIG. 1, and shows a state prior to insertion of an optical fiber into the optical fiber connector;

FIG. 6 is a sectional view corresponding to FIG. 5;

FIG. 7 is a view showing the method for assembling the optical fiber connector of FIG. 1, and is a perspective view showing a state subsequent to insertion of an optical fiber into the optical fiber connector;

FIG. 8 is a sectional view corresponding to FIG. 7;

FIG. 9 is a view showing the method for assembling the optical fiber connector of FIG. 1, and is a perspective view showing a state subsequent to removing the wedges from the optical fiber connector,

FIGS. 10A and 10B are sectional views showing examples of the state in which optical fibers are placed end to end in the conventional technique;

FIGS. 11A and 11B are sectional views showing an example of the state in which the optical fibers are placed end to end in the present invention;

FIG. 12 is a graph showing the connection loss for the optical fibers used in the present invention having end faces formed in a convex curved surface shape, when the end faces of optical fibers having various lengths L1, L2 are placed end to end; and

FIG. 13 is a sectional view showing a modification of the connected optical fiber of the present invention.

### PREFERRED EMBODIMENTS OF THE INVENTION

An embodiment of the connected optical fiber and assembling method thereof according to the present invention will be described in detail with reference to the drawings. In the drawings, the same or equivalent members are referenced using the same symbols, and no redundant descriptions thereof are given.

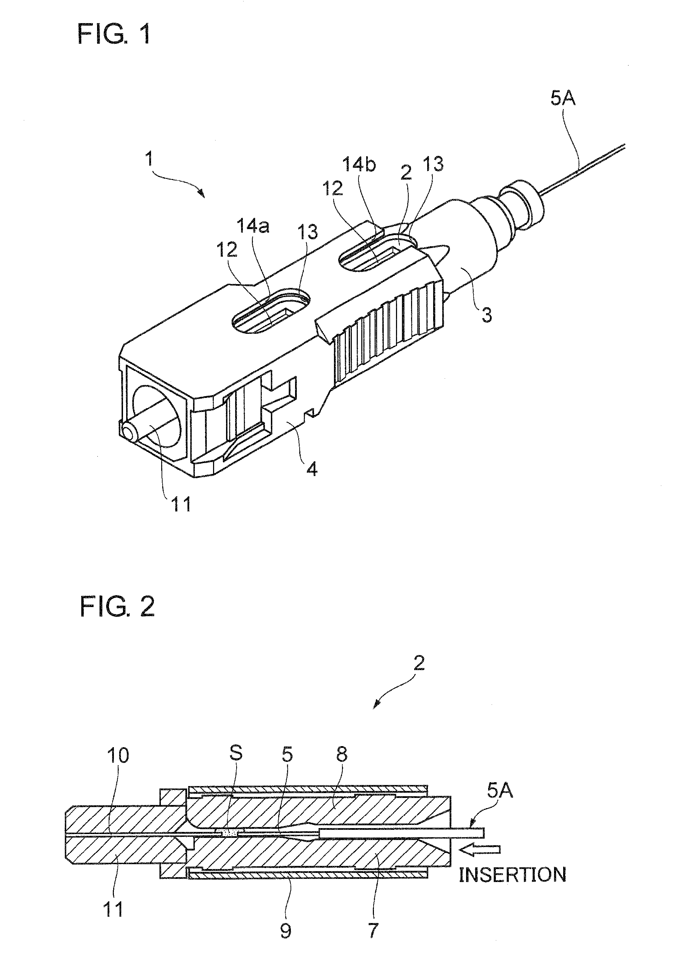

FIG. 1 is a perspective view showing an optical fiber connector 1 that includes an embodiment of the connected optical fiber of the present invention. The optical fiber connector 1 is a mechanical splice-type connector, and is provided with a mechanical splice 2, a housing 3 for accommodating the mechanical splice 2, and a grip 4 for covering the housing 3 from a front end to a center portion thereof. A spring (not shown) for urging the mechanical splice 2 forward is disposed inside the housing 3.

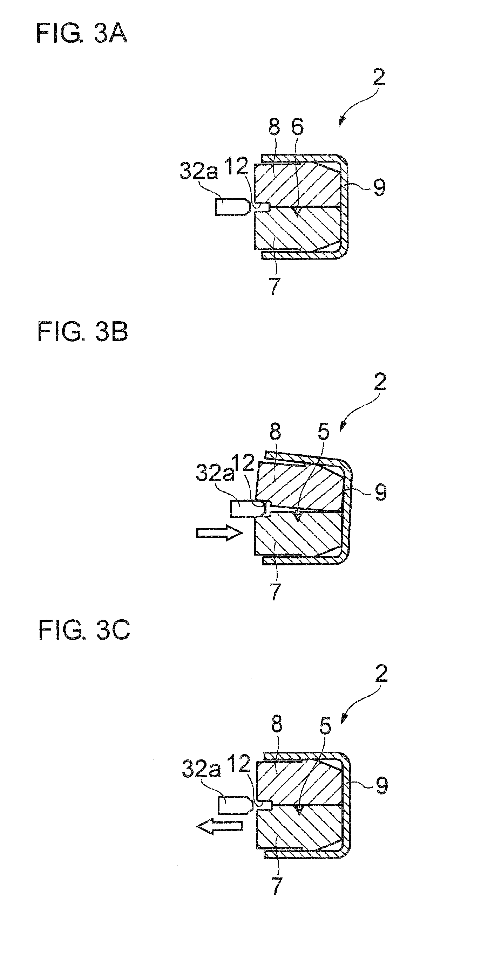

FIG. 2 is a sectional view of the mechanical splice 2 taken along a plane including the optical fiber. FIGS. 3A, 3B, and 3C are sectional views perpendicular to the optical fiber of the mechanical splice 2 prior to insertion, during the insertion, and after withdrawal of a wedge, respectively. The mechanical splice 2 has a base plate 7 having a V-shaped fiber groove 6 for positioning an optical fiber 5 (second optical fiber) of a coated optical fiber 5A (a covering at the distal end portion of the coated optical fiber 5A being removed to expose the optical fiber 5), a pressing plate 8 for pressing the optical fiber 5 disposed in the fiber groove 6 against the base plate 7, and a U-shaped clamping spring 9 for holding together the base plate 7 and the pressing plate 8, and the mechanical splice 2 mechanically connects and fixes the optical fiber 5 of the coated optical fiber 5A and a short-length embedded optical fiber 10 (first optical fiber).

A ferrule 11 in which the embedded optical fiber 10 is retained is integrally fixed to a front end part of the base plate 7. A front end face of the ferrule 11 is polished at an angle. The embedded optical fiber 10 extends from the front end face of the ferrule 11 to the fiber groove 6 of the mechanical splice 2.

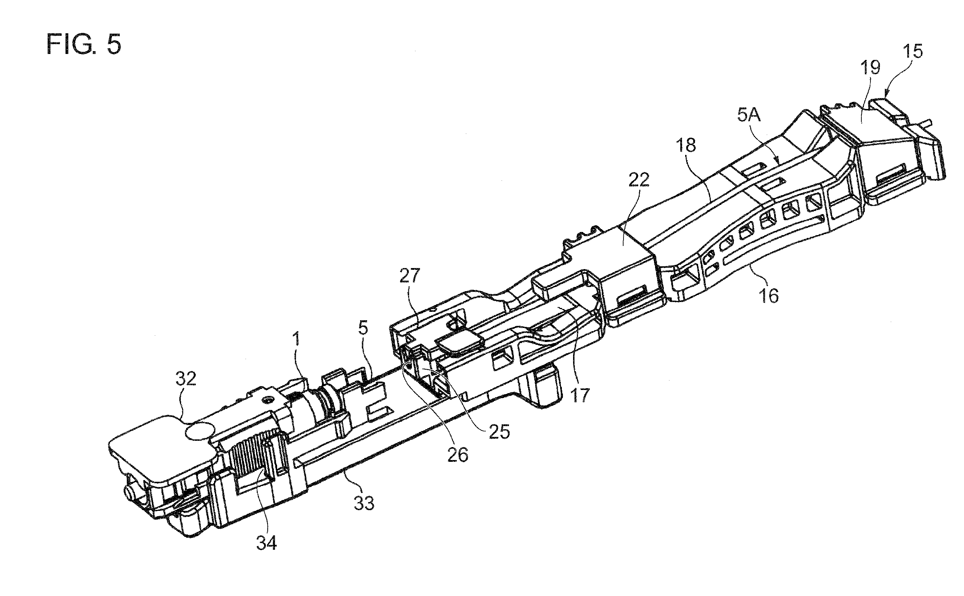

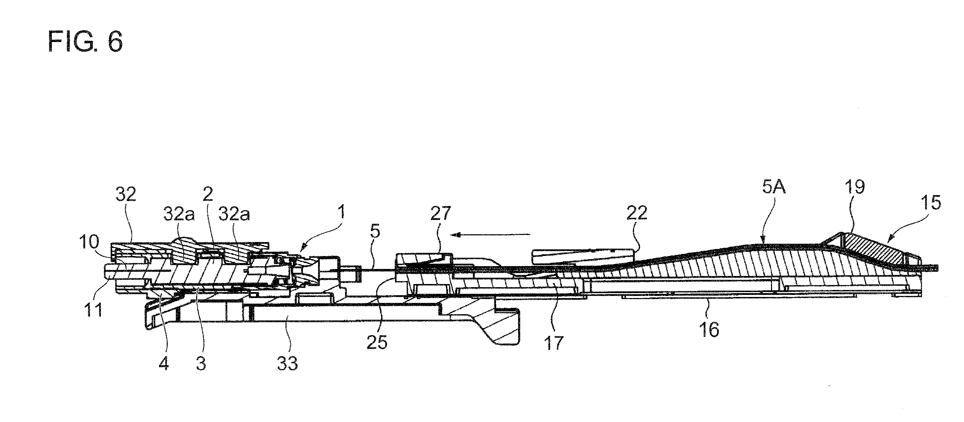

A plurality of (two in this case) wedge insertion holes 12 into which wedges 32a of a wedge member 32 (FIGS. 5 and 6) is inserted is provided at the boundary between the base plate 7 and the pressing plate 8 in the mechanical splice 2. The base plate 7 and the pressing plate 8 are held together by the clamping spring 9 from the side opposite the wedge insertion holes 12,

A plurality of (two in this case) elongated through holes 13 through which the wedges 32a are passed to be inserted in the wedge insertion holes 12 is formed in the housing 3 (FIG. 1). An elongated through hole 14a and a notch 14b are formed in positions corresponding to the elongated through holes 13 in the grip 4.

In the optical fiber connector 1, during connection of the optical fiber 5 to the embedded optical fiber 10, the wedges 32a are first inserted into the wedge insertion holes 12 of the mechanical splice 2 via the elongated through hole 14a, the notch 14b, and the elongated through holes 13 of the housing 3 (FIG. 3B). The base plate 7 and pressing plate 8 of the mechanical splice 2 are thus placed in an open state.

The coated optical fiber 5A is then inserted into the mechanical splice 2 from the rear side of the mechanical splice 2, and the end face of the optical fiber 5 is placed against the end face of the embedded optical fiber 10 (FIG. 2). At this time, the region that includes the space between the end faces of the optical fiber 5 and the embedded optical fiber 10 is filled with an index-matching material S for eliminating optical discontinuity.

In this state, the wedges 32a are withdrawn from the wedge insertion holes 12 of the mechanical splice 2 (FIG. 3C). The base plate 7 and the pressing plate 8 are then closed by the clamping spring 9. The optical fiber 5 and the embedded optical fiber 10 are compressed and fixed together by the base plate 7 and the pressing plate 8 in a state of optical continuity via the index-matching material S.

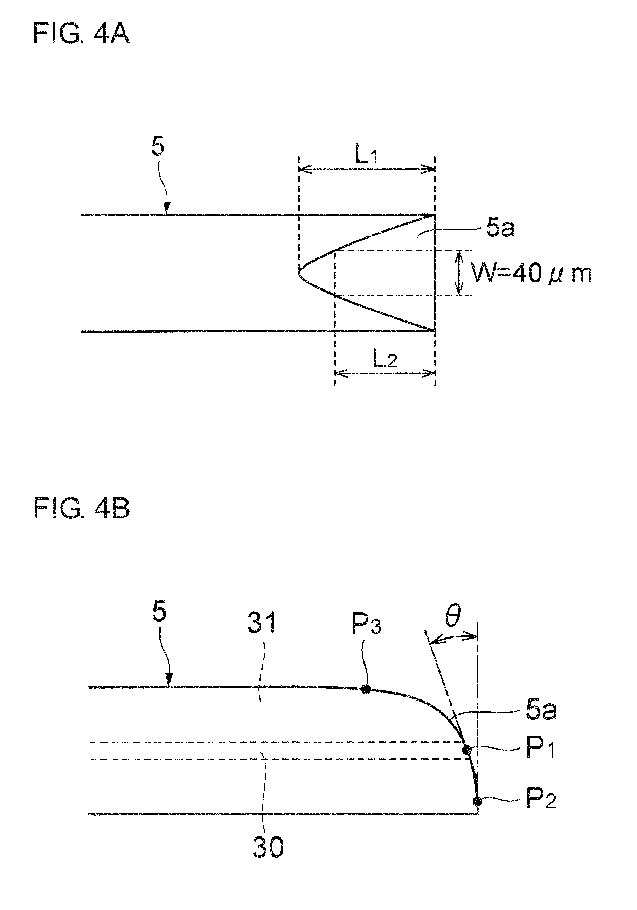

FIG. 4A is an enlarged plan view showing the distal-end portion of the optical fiber 5 that is inserted into the mechanical splice 2, and FIG. 4B is an enlarged side view showing the same. The optical fiber 5 is composed of a core portion 30 for propagating light, and a cladding portion 31 that is provided surrounding the core portion 30. The outside diameter of the optical fiber 5 is 125 µm, and the outside diameter of the core portion 30 therein is 10 µm.

An end face 5a at the distal end of the optical fiber 5 facing the embedded optical fiber 10 is formed having a convex curved surface shape in a direction angled with respect to the surface perpendicular to the axis of the optical fiber 5. At this time, the end face 5a with respect to the surface perpendicular to the axis of the optical fiber 5 has inclination angles θ satisfying the relationship θ2 < θ1 < θ3, where θ1 is the inclination angle at point P1 of the core portion 30, θ2 is the inclination angle at point P2 of the cladding portion 31 positioned on the distal-end side of the optical fiber 5, and θ3 is the inclination angle at point P3 of the cladding portion 31 positioned on the proximal-end side of the optical fiber 5. The end face 5a has a peaked shape that gradually decreases in width in the opposite direction (toward the rear end) from the distal end of the optical fiber 5. Such a convex curved end face 5a can be formed by cutting the distal end part of the optical fiber 5 in non-linear fashion through use of an existing dedicated fiber cutter.

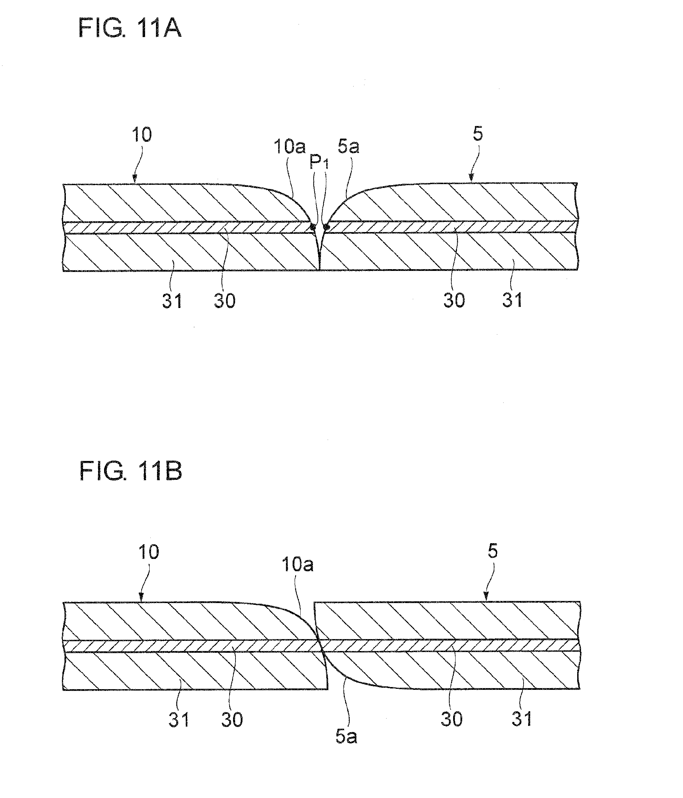

The embedded optical fiber 10 has the same structure and dimensions as the optical fiber 5. An end face 10a having the same shape as the end face 5a is provided at the end of the embedded optical fiber 10 that connects to the optical fiber 5 (FIG. 11).

Since at least one end face of the two optical fibers is formed having a convex curved surface shape in an angled direction, even when the end faces of the two optical fibers are placed end to end at random, the distance between the core portions of each optical fiber is reduced relative to a case in which the end faces are formed flat in the same angled direction. Connection loss as such is therefore reduced. In the case that the space between the two optical fibers is filled with an index-matching material, since fluctuation of connection loss due to fluctuation in the refractive index of the index-matching material is suppressed in high-temperature or low-temperature environments, connection loss is stabilized. For the above reasons, since no problems arise from placing the end faces of the two optical fibers end to end at random, the inclination directions (orientations) of the end faces of the fibers need not be individually scrutinized. There is thereby no need to precisely manage the orientations of the end faces of the optical fibers, and the optical fibers can therefore be connected without excessive labor.

The inclination angle θ1 at point P1 is preferably 4 to 12 degrees. Placing the inclination angle in this range makes it possible to adequately reduce the effect of reflected light. The distance between the core portions of the optical fibers is also prevented from being too great even when the end faces of the two optical fibers are placed end to end at random. Connection loss can therefore be further reduced, and it is possible to further suppress fluctuation of connection loss due to fluctuation in the refractive index of the index-matching material in high-temperature or low-temperature environments.

Furthermore, the length L1 in the axis direction of the optical fiber 5 from the distal end of the optical fiber 5 to the position (rearmost end of the end face) at which the width W of the end face 5a is zero (the minimum value) is preferably 40 µm or less. The length L2 in the axis direction of the optical fiber 5 from the distal end of the optical fiber 5 to the position at which the width W of the end face 5a is 40 µm is preferably 30 µm or less. By having such a shape, the distal end portion of the optical fiber is prevented from losing straightness, and axial misalignment or angle misalignment of the distal end portion of the optical fiber is suppressed. Connection loss can therefore be further reduced.

A method for connecting the optical fiber 5 to the embedded optical fiber 10 provided in the optical fiber connector 1 and assembling a connected optical fiber will next be described. Before assembling of the connected optical fiber, the optical fiber connector 1 includes the mechanical splice 2 which has the base 7 having the fiber groove, the pressing member 8, and the clamp 9 for holding the base 7 and the pressing member 8, the ferrule 11 fixed to the base 7, and the embedded optical fiber 10. In the optical fiber, connector 1. one end face of the embedded optical fiber 10 is formed having a convex curved surface shape in a direction angled with respect to the surface perpendicular to the axis of the embedded optical fiber 10. The one end that includes the one end face of the embedded optical fiber 10 is positioned in the fiber groove in a state in which the wedges 32a are inserted in the wedge insertion holes 12. The other end of the embedded optical fiber 10 is retained (e.g., bonded) in the ferrule 11.

FIG. 5 is a view showing the method for assembling the optical fiber connector 1, and is a perspective view showing the state prior to inserting the coated optical fiber 5A into the optical fiber connector 1. FIG. 6 is a sectional view corresponding to FIG. 5. A fiber holder 15 has a holder base 16 and a holder guide 17 that is provided so as to be able to move forward and backward with respect to the holder base 16.

The holder base 16 has a top surface part that is curved so as to be convex upward. A fiber groove 18 for positioning the coated optical fiber 5A is formed in the top surface part. A substantially U-shaped rear fiber fixing cover 19 and a middle fiber fixing cover 22 for fixing the coated optical fiber 5A in the fiber groove 18 are attached to the holder base 16. The fiber fixing covers 19, 22 can be opened and closed via a shaft (not shown) provided to the holder base 16.

A fiber support part 25 is provided at a front end of the holder guide 17. A fiber groove 26 for positioning the coated optical fiber 5 is formed in the fiber support part 25. A front fiber pressing cover 27 for pressing the coated optical fiber 5A in the fiber groove 26 is integrally fixed to the fiber support part 25 so as to be able to open and close via a hinge.

During connection of the optical fiber 5 to the embedded optical fiber 10 provided in the optical fiber connector 1, the coated optical fiber 5A is first prepared in which the convex curved end face 5a is provided to the distal end part of the optical fiber 5. The coated optical fiber 5A is then placed in the fiber groove 18 of the holder base 16 and the fiber groove 26 of the holder guide 17. In this state, the rear fiber fixing cover 19, the middle fiber fixing cover 22, and the front fiber pressing cover 27 are closed and the coated optical fiber 5A is retained in the fiber holder 15.

The wedge member 32 and an assembly assistance jig 33 are also prepared. The wedges 32a of the wedge member 32 are inserted into the wedge insertion holes 12 of the mechanical splice 2 in the optical fiber connector 1 as described above, thereby creating a state in which the base plate 7 and pressing plate 8 of the mechanical splice 2 are opened. In this state, the optical fiber connector 1 is placed in a connector accommodating part 34 of the assembly assistance jig 33 so that the wedge member 32 is positioned at the top.

The fiber holder 15 in which the coated optical fiber 5A is retained is then disposed on the opposite side of the optical fiber connector 1 on the assembly assistance jig 33. The fiber holder 1 is then moved toward the optical fiber connector 1 on the assembly assistance jig 33. After the optical fiber 5 retained in the fiber holder 15 has been inserted into the optical fiber connector 1. the middle fiber fixing cover 22 is opened. In this state, the fiber holder 15 is further moved toward the optical fiber connector 1. The optical fiber 5 inserted in the mechanical splice 2 then impinges on the embedded optical fiber 10.

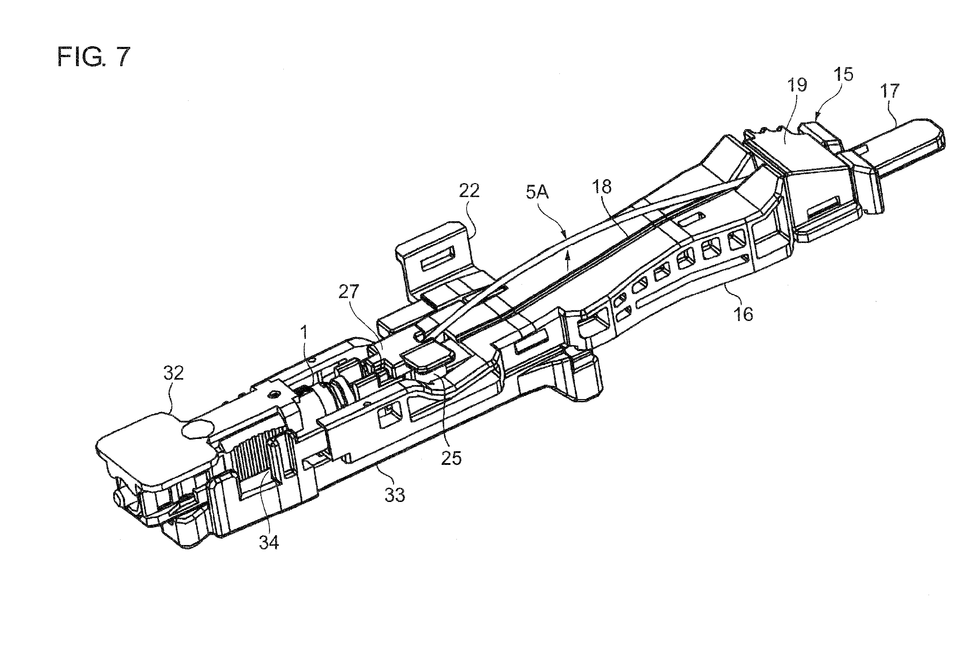

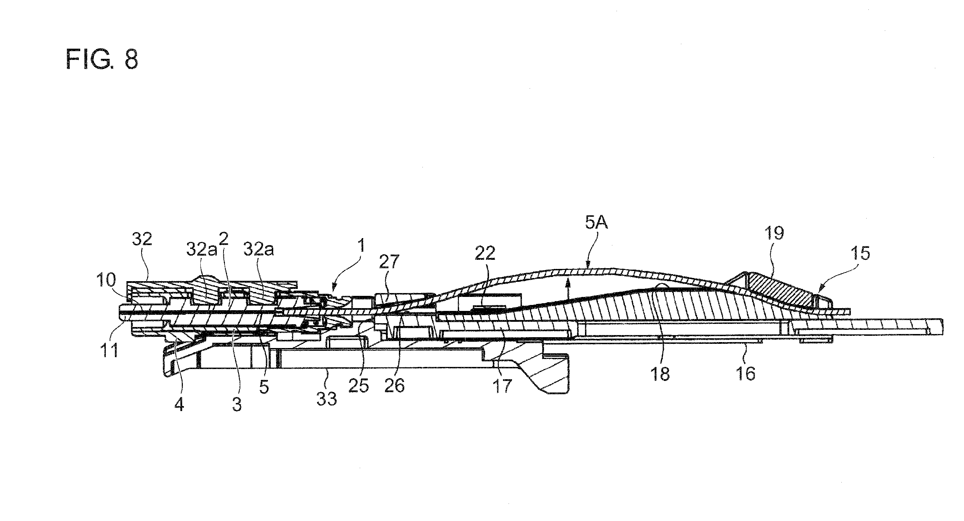

FIG. 7 is a view showing the method for assembling the optical fiber connector 1, and is a perspective view showing the state subsequent to insertion of the coated optical fiber 5A into the optical fiber connector 1. FIG. 8 is a sectional view corresponding to FIG. 7. When the optical fiber 5 impinges on the embedded optical fiber 10, the coated optical fiber 5A flexes upward between the front fiber pressing cover 27 and the rear fiber fixing cover 19 of the fiber holder 15, and the impinging state is maintained by the restoring force of the coated optical fiber 5A.

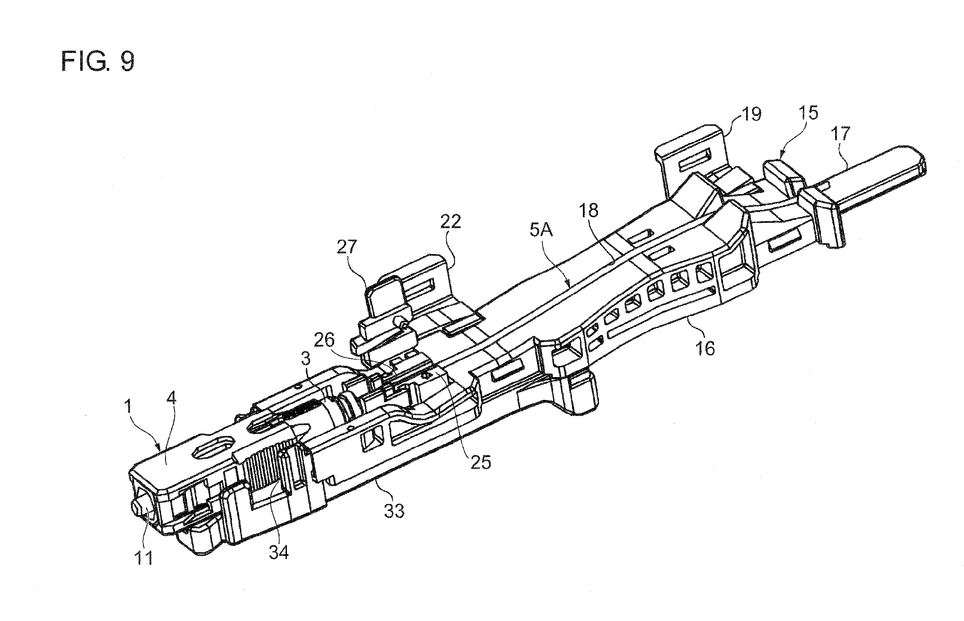

FIG. 9 is a view showing the method for assembling the optical fiber connector 1, and is a perspective view showing a state subsequent to removing the wedges 32a from the optical fiber connector 1. The base plate 7 and pressing plate 8 of the mechanical splice 2 are closed by removing the wedges 32a from the wedge insertion holes 12 of the mechanical splice 2. The embedded optical fiber 10 and the optical fiber 5 are thereby fixed in the mechanical splice 2 in a state of optical connection. The front fiber pressing cover 27 and the rear fiber fixing cover 19 of the fiber holder 15 are then opened, and the optical fiber connector 1 in which the coated optical fiber 5A is assembled is removed from the assembly assistance jig 33.

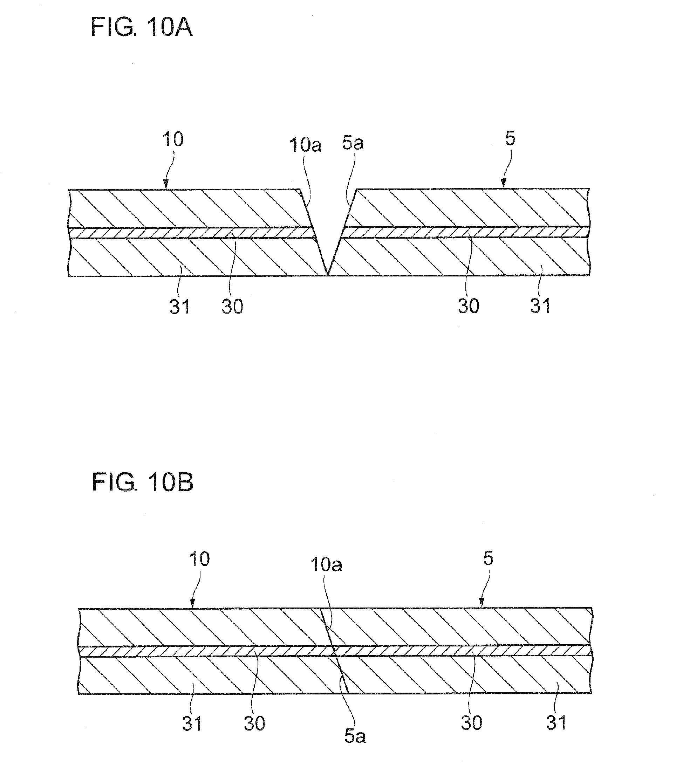

FIGS. 10A and 10B are sectional views showing an example of the state in which optical fibers are placed end to end in the conventional technique. Such problems as those described below arise when the end face 5a of the optical fiber 5 and an end face 10a of the embedded optical fiber 10 are both cut flat and at an angle. Specifically, when the orientations of the end face 5a of the optical fiber 5 and the end face 10a of the embedded optical fiber 10 do not match, the distance between the core portions 30 of the optical fiber 5 and the embedded optical fiber 10 is increased as shown in FIG. 10A when the optical fiber 5 and the embedded optical fiber 10 are placed end to end. Connection loss between the optical fibers 5 and 10 therefore increases. Fluctuation of connection loss between the optical fibers 5 and 10 also increases due to variations in the properties of the index-matching material S that is filled in between the optical fibers 5 and 10 in harsh environments of high temperature or low temperature.

When the orientations of the end face 5a of the optical fiber 5 and the end face 10a of the embedded optical fiber 10 are matched, the problems described above do not occur when the optical fiber 5 and the embedded optical fiber 10 are placed end to end as shown in FIG. 10B. However, in order to align the orientations of the end face 5a and the end face 10a, the orientation of the end face 10a of the embedded optical fiber 10 must be accurately assessed in advance, and the orientation of the end face 5a of the optical fiber 5 must be determined according to the orientation of the end face 10a of the embedded optical fiber 10 during connection of the optical fiber 5. In other words, the orientation of the end face 5a of the optical fiber 5 and the orientation of the end face 10a of the embedded optical fiber 10 must be strictly managed. Consequently, significant labor is required to connect the optical fibers 5 and 10.

FIGS. 11A and 11B are sectional views showing an example of the state in which the optical fibers are placed end to end in the present invention. In this case, the end face 5a of the optical fiber 5 is formed having a convex curved surface shape in a direction angled with respect to the surface perpendicular to the axis of the optical fiber 5, and the end face 10a of the embedded optical fiber 10 is formed having a convex curved surface shape in a direction angled with respect to the surface perpendicular to the axis of the embedded optical fiber 10. Through this configuration, even when the orientations of the end face 5a and the end face 10a are not matched when the optical fiber 5 and the embedded optical fiber 10 are placed end to end, the distance between the core portions 30 of the optical fiber 5 and the embedded optical fiber 10 is reduced relative to the case in which the end faces are cut flat (FIG. 11A). In other words, even when the optical fiber 5 and the embedded optical fiber 10 are placed end to end at random, the distance between the core portions 30 of the optical fiber 5 and the embedded optical fiber 10 is reduced to some degree.

It is therefore not necessary that the optical fiber 5 and the embedded optical fiber 10 are placed end to end so that the orientations of the end face 5a of the optical fiber 5 and the end face 10a of the embedded optical fiber 10 are perfectly matched (FIG. 1B). Consequently, the orientation of the end face 5a of the optical fiber 5 and the orientation of the end face 10a of the embedded optical fiber 10 need not be precisely managed, and the burden on the worker who connects the optical fibers 5 and 10 can be reduced. Since the distance between the core portions 30 of the optical fiber 5 and the embedded optical fiber 10 is also reduced, not only is it possible to keep connection loss as such from increasing, but it is possible to suppress fluctuation of connection loss due to variations in the properties of the index-matching material S in harsh environments of high temperature or low temperature. Furthermore, low light reflection characteristics can be obtained even when the refractive indexes of the index-matching material S and the optical fibers 5 and 10 become unmatched in harsh environments of high temperature or low temperature.

At this time, by placing the inclination angle θ1 at point P1 of the end face 5a and the end face 10a of the core portion 30 in the range of 4 to 12 degrees, lower light reflection characteristics can be obtained, and the distance between the core portions 30 of the optical fiber 5 and the embedded optical fiber 10 can be reliably reduced.

By setting the length L1 defined in FIG. 4 to 40 µm or less and setting the length L2 to 30 µm or less, the straightness of the optical fiber 5 is adequately maintained when the optical fiber 5 is compressed by the base plate 7 and the pressing plate 8, and the distal end part of the optical fiber 5 extends straightly. The same applies for the embedded optical fiber 10. Consequently, since axial misalignment or angle misalignment of the distal end portion of the optical fiber 5 and the embedded, optical fiber 10 is suppressed, connection loss between the optical fibers 5 and 10 can be further reduced.

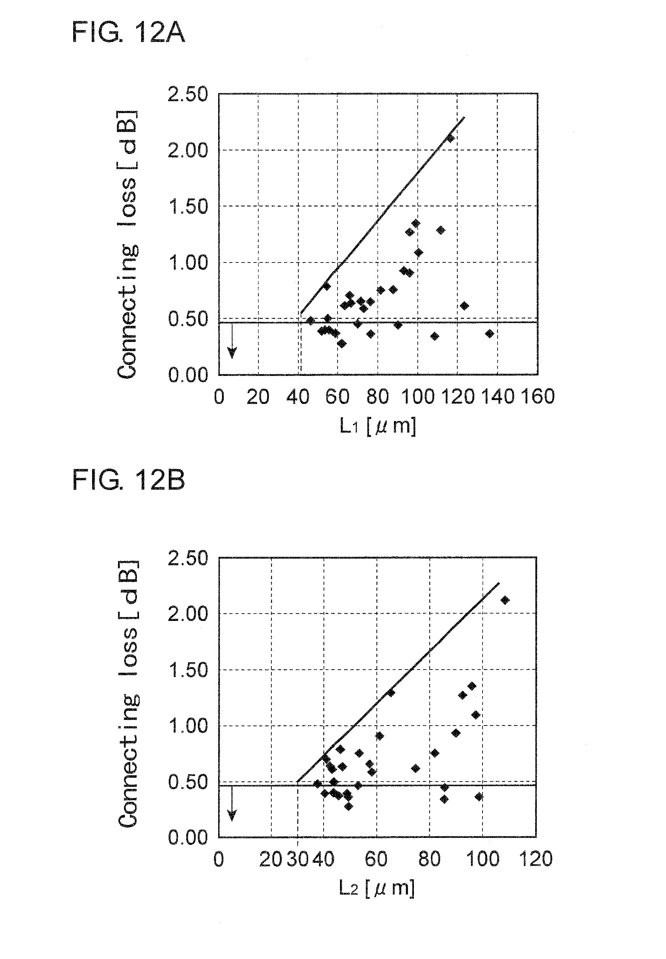

FIG. 12 is a graph showing the connection loss for the optical fibers used in the present invention having end faces formed in a convex curved surface shape, when the end faces of optical fibers having various lengths L1, L2 are placed end to end. The wavelength of the communication light propagated through the core portions of the optical fibers is 1310 nm. Connection loss decreases and fluctuation of connection loss decreases as the lengths L1, L2 are reduced. When the length L1 is 40 µm or less and the length L2 is 30 µm or less, it is apparent that a connection loss of 0.5 dB or less is maintained even when there is some fluctuation in connection loss.

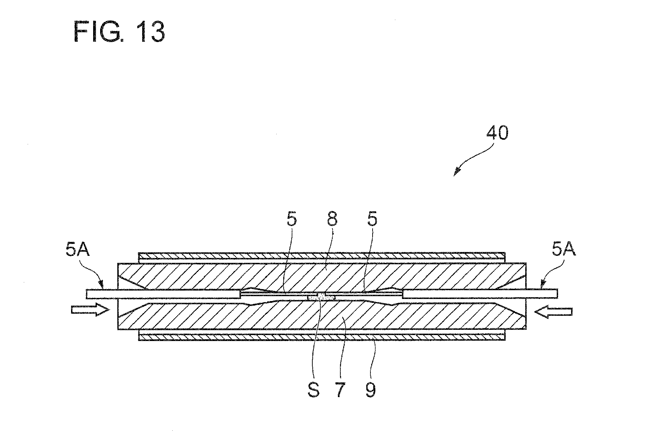

FIG. 13 is a sectional view showing a modification of the connected optical fiber of the present invention. The mechanical splice 40 is composed of a base plate 7 having a fiber groove 6, and a pressing plate 8 and clamping spring 9, the same as the mechanical splice 2. A plurality of wedge insertion holes 12 is provided at the boundary between the base plate 7 and the pressing plate 8 in the mechanical splice 40. The mechanical splice 40 is accommodated in a housing not shown in the drawing.

When two coated optical fibers 5A are to be connected to each other using the optical fiber connector which has the mechanical splice 40, two fiber holders 15 are first prepared, and a coated optical fiber 5A is retained and fixed in each fiber holder 15. The two coated optical fibers 5A are then inserted into the mechanical splice 40 from both sides of the mechanical splice 40 in a state in which the base plate 7 and pressing plate 8 of the mechanical splice 40 are open, so that the end faces 5a of the optical fibers 5 impinge on each other. In this state, the wedge member 32 is removed from the mechanical splice 40 as described above, and the base plate 7 and pressing plate 8 of the mechanical splice 40 are closed. The optical fibers 5 are thereby fixed in the mechanical splice 40 in a state of optical connection with each other via the index-matching material S.

The present invention is not limited to the embodiment described above. For example, in the embodiment described above, the end faces of two optical fibers placed end to end are formed having a convex curved surface shape in a direction angled with respect to the surface perpendicular to the axis of each optical fiber, but a configuration can be adopted in which the end face of only one of the two optical fibers is formed having a convex curved surface shape in a direction angled with respect to the surface perpendicular to the axis of the optical fiber. The structure of the mechanical splice is also not particularly limited to the embodiment described above.

### Industrial Applicability

The optical fiber connector of the present invention can be used to connect fibers to subscribers in the optical interconnections of a building.

### Prior Art Citations

### Patent Citations

Patent Citation 1: Japanese Laid-open Patent Publication No. 2009-145381

## Claims

1. A connected optical fiber comprising: a first optical fiber, a second optical fiber, and a mechanical splice, an end face of said first optical fiber and an end face of said second optical fiber being placed end to end and mechanically connected in said mechanical splice; wherein
at least one end face among the end face of said first optical fiber and the end face of said second optical fiber is formed having a convex curved surface shape in a direction angled with respect to a surface perpendicular to an axis of the optical fiber that has the end face.

2. The connected optical fiber according to claim 1, wherein
said mechanical splice includes a base having a fiber groove; a pressing member; and a clamp for holding together said base and said pressing member; one end part including the end face of said first optical fiber and one end part including the end face of said second optical fiber being pressed against said base by said pressing member in a state of being positioned arranged in said fiber groove.

3. The connected optical fiber according to claim 2; wherein
said first optical fiber is a embedded optical fiber in which the other end part thereof is retained in a ferrule fixed to said base.

4. The connected optical fiber according to any of claims 1 through 3; wherein
the length along the axis of the optical fiber from the distal end of the optical fiber that has said at least one end face to a rear end of the end face is 40 µm or less.

5. The connected optical fiber according to claim 4; wherein
the length along the axis of the optical fiber to the position at which the width of the end face is 40 µm from the distal end of the optical fiber that has said at least one end face is 30 µm or less.

6. The connected optical fiber according to any of claims 1 through 5; wherein
at said at least one end face, the inclination angle of the end face with respect to a surface perpendicular to the axis of the optical fiber in a core portion of the optical fiber that has the end face is 4 to 12 degrees.

7. An optical fiber connector comprising:
a mechanical splice having a base which has a fiber groove; a pressing member; and a clamp for holding together said base and said pressing member;
a ferrule fixed to said base; and
a embedded optical fiber; wherein
one end face of said embedded optical fiber is formed having a convex curved surface shape in a direction angled with respect to a surface perpendicular to an axis of said embedded optical fiber, one end side of said embedded optical fiber is positioned arranged in said fiber groove, and the other end side of said embedded optical fiber is retained in said ferrule.

8. A method for assembling a connected optical fiber, the method including placing end faces of two optical fibers end to end and mechanically connecting the optical fibers through use of a mechanical splice, said method for assembling a connected optical fiber including the steps of
introducing said two optical fibers into said mechanical splice, at least one optical fiber among said two optical fibers having a convex curved surface shape in a direction angled with respect to a surface perpendicular to the axis of the optical fiber,
placing end faces against each other, and
fixing said two optical fibers in this state in said mechanical splice.
